# EUROPEAN PATENT APPLICATION

(11) **EP 1 511 114 A2**
(43) Date of publication of application: **02.03.2005**
(21) Application number: 04255173.9
(22) Date of filing: 26.08.2004
(51) Int. Cl.: H01M 8/12, H01M 8/24

(54) **Fuel-cell device**

(30) Priority: 28.08.2003 JP 2003209384
(71) Applicant: Shinko Electric Industries Co., Ltd., Nagano-shi, Nagano 381-2287 (JP)
(72) Inventor:
(74) Representative: Rackham, Stephen Neil

(57) **Abstract**

The present invention relates to a fuel-cell device utilizing surface-migration on organic solid wherein a cathode layer (2) and an anode layer (3) are arranged in parallel to each other on one surface of a solid organic substrate (1). A strip-shaped cathode layer (2) formed from SSC or the like and a strip-shaped permeable anode layer (3) formed from a rhenium metal powder or the like are arranged in parallel and spaced apart from each other on one surface of the substrate (1) made of a polyester film or the like. A fluid fuel such as ethanol is supplied to the entire surface of the anode layer (3) so as to permeate therethrough. Oxygen ions formed at the cathode layer (2) exposed to the atmosphere migrate over a surface of the substrate (1) and react with the fuel species supplied to the anode layer (3).

## Description

The present invention relates to a fuel-cell device utilizing surface-migration on organic solid, and more particularly to a fuel-cell device utilizing surface-migration on organic solid comprising a cathode layer and an anode layer formed a prescribed distance apart on one surface of a solid organic substrate, wherein provisions are made to supply a fuel to the anode layer via a fuel supply layer formed thereon and to supply air to the cathode layer, thereby accomplishing a simple structure obviating the need to hermetically seal the fuel-cell device, and thus achieving a compact and thin construction while, at the same time, achieving a lower operating temperature for power generation.

Heretofore, fuel cells have been developed and commercially implemented as a low-pollution power generating means to replace traditional power generation such as thermal power generation, or as an electric energy source for electric vehicles that replaces the internal combustion engine which uses gasoline or the like as the fuel. For such fuel cells, much research effort has been expended to increase the efficiency and to reduce the cost.

Fuel cells can be classified into various types according to the method of power generation, one being the type of fuel cell that uses a solid electrolyte. As one example of the fuel cell that uses a solid electrolyte, a fuel cell is known that uses a calcined structure made of yttria (Y₂O₃)-doped stabilized zirconia as an oxygen ion conducting solid electrolyte layer. This type of fuel cell comprises a cathode layer formed on one surface of the solid electrolyte layer and an anode layer on the opposite surface thereof, and oxygen or an oxygen-containing gas is fed to the cathode layer, while a fuel gas such as methane is fed to the anode layer.

In this fuel cell, the oxygen (O₂) fed to the cathode layer is converted into oxygen ions (O²⁻) at the boundary between the cathode layer and the solid electrolyte layer, and the oxygen ions are conducted through the solid electrolyte layer into the anode layer where the ions react with the fuel gas, for example, a methane gas (CH₄), fed to the anode layer, the end products of the reaction being water (H₂O) and carbon dioxide (CO₂). In this reaction process, as the oxygen ions release electrons, a potential difference occurs between the cathode layer and the anode layer. Here, when the cathode layer and the anode layer are electrically connected by a lead wire, the electrons in the anode layer flow into the cathode layer via the lead wire, and the fuel cell thus generates electricity. The operating temperature of this type of fuel cell is about 1000°C.

However, this type of fuel cell requires the provision of separate chambers, one being an oxygen or oxygen-containing gas supply chamber on the cathode layer side and the other a fuel gas supply chamber on the anode layer side; furthermore, as the fuel cell is exposed to oxidizing and reducing atmospheres at high temperatures, it has been difficult to increase the durability of the fuel cell.

On the other hand, there has been developed a fuel cell of the type that comprises a cathode layer and an anode layer formed on opposite surfaces of a solid electrolyte layer, and that generates an electromotive force between the cathode layer and the anode layer by placing the fuel cell in a mixed fuel gas consisting of a fuel gas, for example, a methane gas, and an oxygen gas. The principle of generating an electromotive force between the cathode layer and the anode layer is the same for this type of fuel cell as for the above-described separate-chamber type fuel cell but, as the whole fuel cell can be exposed to substantially the same atmosphere, the fuel cell can be constructed as a single-chamber type cell to which the mixed fuel gas is supplied, and this serves to increase the durability of the fuel cell.

However, in this single-chamber fuel cell also, as the fuel cell has to be operated at a high temperature of about 1000°C, there is the danger that the mixed fuel gas may explode. Here, if the oxygen concentration is reduced to a level lower than the ignitability limit to avoid such danger, there occurs the problem that carbonization of the fuel, such as methane, progresses and the cell performance degrades. In view of this, there is proposed, for example, in Japanese Unexamined Patent Publication No. 2003-92124, a single-chamber fuel-cell device that can use a mixed fuel gas whose oxygen concentration is adjusted so as to be able to prevent the progress of carbonization of the fuel, while at the same time, preventing the explosion of the mixed fuel gas.

The fuel-cell device described above is of the type that is constructed by housing individual fuel cells in a single chamber; on the other hand, an apparatus has been proposed that does not require the provision of a special chamber, and that generates electricity by placing a solid electrolyte fuel cell in or near a flame and thereby holding the solid electrolyte fuel cell at its operating temperature.

The fuel cell used in this electric power generating apparatus comprises a zirconia solid electrolyte layer formed in a tubular structure, an anode layer as a fuel electrode formed on the outer circumference of the tubular structure, and a cathode layer as an air electrode formed on the inner circumference of the tubular structure. This solid electrolyte fuel cell is operated with the anode layer exposed to a reducing flame portion of a flame generated from a combustion apparatus to which the fuel gas is supplied. In this arrangement, radical components, etc. present in the reducing flame are utilized as the fuel, while air is supplied by convection or diffusion to the cathode layer inside the tubular structure, and the fuel cell thus generates electricity. Such a fuel-cell device is proposed, for example, in Japanese Unexamined Patent Publication No. 6-196176.

In any of the above proposed fuel-cell devices, the solid electrolyte layer functions as an oxygen ion conductor, and the oxygen ions conducted through the solid electrolyte layer react with fuel species to generate an electromotive force. On the other hand, in a paper by W. van Gool, entitled "THE POSSIBLE USE OF SURFACE MIGRATION IN FUEL CELLS AND HETEROGENEOUS CATALYSIS," Philips Res. Repts 20, 81-93, 1965, a fuel cell is proposed that operates on the principle that an electromotive force can be generated by the two reactant species migrating over the surface of an insulating substrate and reacting with each other.

In this fuel cell, two electrodes are arranged in close proximity to each other on the same surface of an insulating substrate, and both electrodes are exposed to a mixed gas of oxygen and hydrogen. At one electrode, oxygen ions are formed by chemisorption and, at the other electrode, hydrogen ions are formed by chemisorption; then, the thus formed oxygen ions and hydrogen ions migrate over the surface of the insulating substrate and react with each other. It is claimed that, in this way, an electromotive force can be generated between the two electrodes.

The earlier described single-chamber fuel-cell device obviates the necessity of strictly separating the fuel and the air, as was the case with conventional solid electrolyte fuel-cell devices, but has to employ an explosion-proof, hermetically sealed construction. Further, to increase the electromotive force, a plurality of plate-like solid electrolyte fuel cells need to be stacked and, since they are operated at high temperatures, an interconnect material having high heat resistance and high electrical conductivity must be used to electrically connect the plurality of plate-like solid electrolyte fuel cells. As a result, the single-chamber fuel-cell device constructed from a stack of plate-like solid electrolyte fuel cells has the problem that the construction is not only large but also costly.

Furthermore, as the temperature is gradually raised to the high operating temperature in order to prevent cracking of the plate-like solid electrolyte fuel cells, this type of single-chamber fuel-cell device has had the problem that it requires a significant startup time and hence extra trouble to operate; that is, with this type of fuel-cell device, it has not been possible to generate electricity in a simple manner.

In contrast, the oxygen ion conducting solid electrolyte fuel-cell device formed in a tubular structure employs the fuel cell of the type that directly utilizes a flame; this type of fuel cell has the characteristic of being an open type, the solid electrolyte fuel cell not needing to be housed in a hermetically sealed container. As a result, this type of fuel cell can have a reduced startup time, is simple in structure, and is therefore advantageous when it comes to reducing the size, weight, and cost of the fuel cell, and it can be said that this fuel cell is a handy power plant. Further, as the flame is directly used, this type of fuel cell can be incorporated in a conventional combustion apparatus or an incinerator or the like, and is thus expected to be used as an electricity supply device.

However, in this type of fuel cell, as the anode layer is formed on the outer circumference of the tubular solid electrolyte layer, radical components due to the flame are not supplied, in particular, to the upper half of the anode layer, and effective use cannot be made of the entire surface of the anode layer formed on the outer circumference of the tubular solid electrolyte layer. This has degraded the power generation efficiency. There has also been the problem that, as the solid electrolyte fuel cell is directly heated by the flame, cracking tends to occur due to rapid changes in temperature, and the solid electrolyte fuel cell, if cracked, eventually disintegrates into pieces, resulting in an inability to generate electricity.

On the other hand, the earlier cited paper provides no more than a report that the proposed fuel cell can theoretically generate an electromotive force, and this type of fuel cell has not been implemented in practice for such reasons as: it has been difficult to form the two electrodes close enough together; an electrode material that can form a specific reactant species by selectively chemisorbing one of the reaction components is not easily found; the insulating substrate must have good desorption for the reaction product formed on its surface; and experiments must be performed outside the explosion range of the mixed gas.

Considering the above problems, and noting that the type of fuel cell configuration in which the two electrodes are arranged side by side on one surface of an insulating substrate is suitable for reducing the thickness of the fuel cell, it is an object of the present invention to provide, based on the findings obtained during the development of solid electrolyte fuel cells, a fuel-cell device utilizing surface-migration on organic solid in which a cathode layer and an anode layer are arranged parallel to each other on one surface of a solid organic substrate, wherein provisions are made to supply air to the cathode layer and to supply a fluid fuel directly to the anode layer, thereby achieving reductions in the size and cost of the fuel-cell device while, at the same time, achieving lower operating temperature for power generation.

To solve the above-enumerated problems, the present invention provides a fuel-cell device utilizing surface-migration on organic solid in which a cathode layer, to which air is supplied, and an anode layer, to which a fluid fuel is supplied, are arranged on one surface of a solid organic substrate in such a manner as to oppose each other across a given surface region of the solid organic substrate, wherein a fuel supply layer for supplying the fluid fuel to the surface region via the anode layer is provided in contacting relationship with the anode layer.

The solid organic substrate is formed from a material selected from the group consisting of a polyethylene terephthalate resin, a polyester resin, an epoxy resin, a polyimide resin, a polyvinylidene chloride resin, and a polyethylene resin, wherein the solid organic substrate can be formed on a reinforcing substrate, a semiconductor substrate, or a heat-exchange substrate.

The cathode layer and the anode layer are porous layers each formed in the shape of a strip. Alternatively, the cathode layer is a porous layer formed in the shape of a strip and the anode layer is a metal powder filled layer formed in the shape of a strip, or the cathode layer is a porous layer formed in the shape of a strip and the anode layer is a metal plate formed in the shape of a strip.

The anode layer is formed from a material selected from the group consisting of rhenium, tungsten, nickel, molybdenum, and copper, while the cathode layer is formed from a material selected from the group consisting of samarium strontium cobaltite, lanthanum strontium cobaltite, and lanthanum strontium manganite.

The fuel supply layer is placed along the length of the anode layer in contacting relationship with an upper surface or a side surface of the anode layer so that the fluid fuel permeates from one end of the fuel supply layer and is supplied to the surface region, wherein the fuel supply layer is formed from an inorganic powder filled material or an inorganic fiber aggregate; further, the fuel supply layer has, on a surface thereof opposite from the anode layer, a cover layer for preventing the fluid fuel from scattering or evaporating, wherein the cover layer can be formed in such a manner as to cover all surfaces of the fuel supply layer except the surface thereof contacting the anode layer.

A plurality of cathode layers and a plurality of anode layers are formed on the solid organic substrate, wherein the plurality of cathode layers extending from a common cathode layer and the plurality of anode layers extending from a common anode layer are arranged parallel to each other in interlocking comb-shaped patterns on the solid organic substrate.

In a preferred mode, a plurality of common cathode layers and a plurality of common anode layers are provided, wherein the common cathode layers and the common anode layers are respectively connected together electrically and the common cathode layers and the common anode layers are connected in parallel; alternatively, a plurality of common cathode layers and a plurality of common anode layers are provided, wherein the common cathode layers and the common anode layers are alternately connected electrically and the common cathode layers and the common anode layers are connected in series.

In another preferred mode, a plurality of common cathode layers and a plurality of common anode layers are provided, wherein the common cathode layers and the common anode layers are respectively connected together electrically, forming a plurality of parallel connection groups of the common cathode layers and the common anode layers, and the plurality of parallel connection groups are connected in series.

The fuel supply layer is placed between two adjacent ones of the anode layers in contacting relationship with side surfaces of the adjacent anode layers so that the fluid fuel permeates from one end of the fuel supply layer and is supplied to the surface region via each of the adjacent anode layers, wherein each of the cathode layers is disposed on either side of the anode layers opposite from the fuel supply layer in such a manner as to sandwich the surface region therebetween, and a cover layer is provided that covers the upper surfaces of the adjacent anode layers as well as the fuel supply layer placed between the anode layers.

Other features, objects and advantages of the present invention will become apparent from the following description of preferred embodiments with reference to the drawings in which like reference characters designate like or corresponding parts throughout several views, and in which:
Figures 1A and 1B are vertical cross-sectional views for explaining a first embodiment of a fuel-cell device utilizing surface-migration on organic solid according to the present invention;
Figure 2 is a top plan view for explaining a specific example of the electrode configuration employed in the fuel-cell device utilizing surface-migration on organic solid of the first embodiment;
Figure 3 is a vertical cross-sectional view for explaining a second embodiment of a fuel-cell device utilizing surface-migration on organic solid according to the present invention;
Figure 4 is a vertical cross-sectional view for explaining a third embodiment of a fuel-cell device utilizing surface-migration on organic solid according to the present invention;
Figures 5A and 5B are a vertical cross-sectional view and a top plan view for explaining a fourth embodiment of a fuel-cell device utilizing surface-migration on organic solid according to the present invention;
Figure 6 is a vertical cross-sectional view for explaining a modified example of the fuel-cell device utilizing surface-migration on organic solid according to the fourth embodiment;
Figures 7A and 7B are diagrams for explaining specific examples in which cathode layers and anode layers are arranged in interlocking comb-shaped patterns in the fuel-cell device utilizing surface-migration on organic solid of the present invention;
Figure 8 is a diagram for explaining another specific example in which the cathode layers and the anode layers are arranged in interlocking comb-shaped patterns in the fuel-cell device utilizing surface-migration on organic solid of the present invention; and
Figures 9A and 9B are diagrams for explaining examples of the structures of prior art solid electrolyte fuel-cell devices.

Embodiments of a fuel-cell device utilizing surface-migration on organic solid according to the present invention will be described below with reference to the drawings. However, before proceeding to the description of the fuel-cell devices utilizing surface-migration on organic solid of the embodiments according to the present invention, prior art solid electrolyte fuel-cell devices related to the fuel-cell devices utilizing surface-migration on organic solid of the embodiments will be described in order to clarify the features and advantages of the respective embodiments.

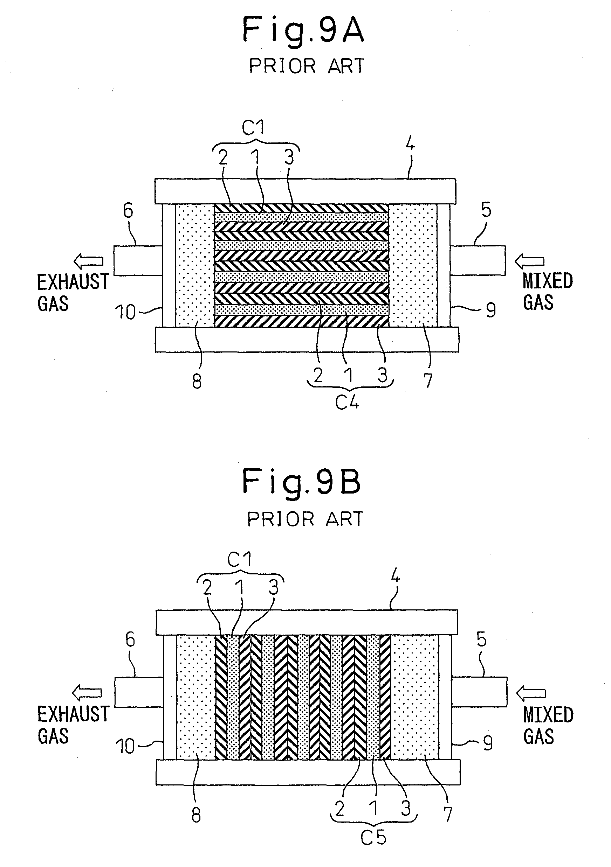

Figures 9A and 9B show the structures of the single-chamber fuel-cell devices proposed in the prior art. The fuel-cell device shown in Figure 9A has a structure in which individual fuel cells each containing a solid electrolyte layer are stacked one on top of another with each cell oriented parallel to the flow direction of the mixed fuel gas. Each fuel cell comprises a solid electrolyte layer 1 of a closely compacted structure and a cathode layer 2 and an anode layer 3 as porous layers formed on opposite surfaces of the solid electrolyte layer 1, and the plurality of fuel cells C1 to C4 of identical structure are stacked in a ceramic container 4. Then, the fuel cells are hermetically sealed in the container 4, after adding fillers 7 and 8, by closing them with end plates 9 and 10.

The container 4 is provided with a supply pipe 5 for supplying the mixed fuel gas containing oxygen and a fuel such as methane and an exhaust pipe 6 for ejecting the exhaust gas. Vacant spaces in the container 4, where the mixed fuel gas and the exhaust gas flow, i.e., the areas in the container 4 other than the area occupied by the fuel cells, are filled with the fillers 7 and 8, and a suitable gap is provided therebetween, thereby preventing the mixed fuel gas from igniting even when the mixed fuel gas within the ignitability limit is contained therein when the fuel-cell device is operated.

The basic structure of the fuel-cell device shown in Figure 9B is the same as that of the single-chamber fuel-cell device shown in Figure 9A, except that the individual fuel cells each containing a solid electrolyte layer are stacked in the axial direction of the container 4 with each cell oriented perpendicularly to the flow direction of the mixed fuel gas. In this case, each fuel cell comprises a solid electrolyte layer 1 of a porous structure and a cathode layer 2 and an anode layer 3 as porous layers formed on opposite surfaces of the solid electrolyte layer 1, and the plurality of fuel cells C1 to C5 of identical structure are stacked in the container 4.

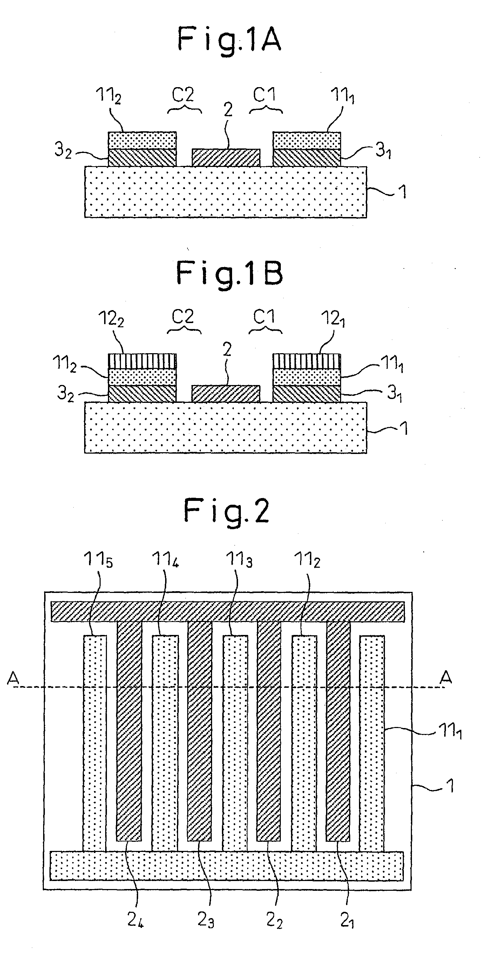

Next, the embodiments of the fuel-cell device utilizing surface-migration on organic solid according to the present invention will be described with reference to Figures 1 to 8 but, before proceeding to the detailed description of the embodiments of the fuel-cell device utilizing surface-migration on organic solid according to the present invention, the reason that has led to the adoption of the fuel cell structure characterizing the embodiments will be described first.

An oxygen ion conducting solid electrolyte fuel-cell device that directly utilizes a flame, such as described previously, has been developed as a fuel-cell device that can be used as a handy power plant without requiring a hermetically sealed structure. In this type of solid electrolyte fuel-cell device, unlike the fuel-cell device that uses separate chambers according to the prior art, the oxygen to be fed to the cathode layer and the fuel to be fed to the anode layer can be reliably separated despite its open type construction but, as the solid electrolyte layer is formed in the shape of a tube, the flame has not been able to be applied efficiently to the anode layer formed on the outer circumference of the solid electrolyte layer, and therefore, its power generation efficiency has been low.

It can therefore be understood that, to increase the power generation efficiency of the solid electrolyte fuel-cell device, the fuel should be supplied uniformly over the entire surface of the anode layer. To increase the power generation efficiency, in the fuel-cell device utilizing surface-migration on organic solid of each embodiment of the present invention, a fluid fuel relatively easy to handle is employed as the fuel, and a fuel supply layer is provided that allows the fluid fuel to permeate therethrough so as to be fed uniformly over the entire surface of the anode layer. A fuel that easily permeates through the fuel supply layer is suitable for use as the fluid fuel and examples include hydrogen, vapor-phase hydrocarbons, etc. in the case of a gaseous fuel, and liquid-phase hydrocarbons, alcohol, ketone, ester, ether, etc. in the case of a liquid fuel.

On the other hand, attempts have been made to increase the power generation performance of the oxygen ion conducting solid electrolyte fuel-cell devices of the single chamber type shown in Figures 9A and 9B. In this type of solid electrolyte fuel-cell device, fuel cells, each comprising a cathode layer formed on one surface of an oxygen ion conducting electrolyte layer and an anode layer formed on the opposite surface thereof, are supplied with a mixed fuel gas consisting of a fuel gas, such as methane, and oxygen, in such a manner that the cathode layers and the anode layers are both exposed to the mixed fuel gas within the container, and oxidation and reduction occur between the fuel gas and the oxygen in each fuel cell, thereby generating an electromotive force.

The anode layer of each fuel cell is formed from a ceramic having electrical conductivity or a metal having oxidation resistance to the mixed fuel gas supplied at the operating temperature of the fuel cell; here, it has been proposed to increase the power generation performance by adding a transition metal or its oxide to the anode layer, the transition metal being selected from the group consisting of rhodium (Rh), platinum (Pt), ruthenium (Ru), palladium (Pd), rhenium (Re), and iridium (Ir).

When contributions, etc. of such metals or their oxides to the power generation performance, when added in the anode layer, were examined, it was confirmed that any of these transition metals or their oxides has a good catalyst activation effect in the oxidation-reduction reaction occurring between the fuel gas and the oxygen. It has thus been found that, when the anode layer of the oxygen ion conducting solid electrolyte fuel cell is formed from any of these transition metals, the oxidation-reduction reaction can be sufficiently induced between the fuel gas and the oxygen, and an electromotive force can be generated between the cathode layer and the anode layer.

Therefore, based on this finding, it was decided to form the anode layer of the oxygen ion conducting solid electrolyte fuel cell from a transition metal selected from the group consisting of rhodium (Rh), platinum (Pt), ruthenium (Ru), palladium (Pd), rhenium (Re), and iridium (Ir). Further, as it is required that the anode layer formed from such a transition metal be permeable to the fluid fuel supplied, it has been found that the anode layer should be formed from a porous layer or a layer filled with powder particles.

Here, taking rhenium (Re) as an example, the anode layer can be formed on the solid electrolyte layer by sputtering or evaporating a rhenium metal; here, since a rhenium powder with a purity of 99.995% and a grain size of 100 to 325 mesh (manufactured by Aldrich) is commercially available, this rhenium powder can be conveniently used as-is as the anode layer. In particular, the rhenium powder has the property that its electrical conductivity is high even in a powder state; therefore, the rhenium powder is advantageous because the internal resistance of the anode layer itself can be reduced even if the rhenium metal powder is used, as-is, as the anode layer.

Using the rhenium in the powder state has the advantage that the specific surface area increases, increasing the number of points at which the powder particles contact each other. In the case of other transition metals as well, the catalytic activity can be enhanced because the contact condition of particle surfaces improves and the specific surface area increases; therefore, it has been confirmed that not only rhenium, but also other transition metals, can also be used in a powder state to form the anode layer.

In the case of the transition metals other than rhenium, a porous anode layer can be easily formed by preparing a metal powder in the form of a paste and sintering the paste but, in the case of the rhenium metal powder, it is known that when it is heated, for example, in the atmosphere, if the temperature exceeds about 400°C, its weight decreases, and also that when it is heated in a nitrogen atmosphere, if the temperature exceeds about 418°C, its weight decreases. As a result, if the rhenium metal powder is prepared in the form of a paste and the paste is sintered, the rhenium metal vaporizes and the anode layer cannot be formed; therefore, it can be understood that the rhenium metal should be used in a powder form.

It will be recalled that, in the case of the oxygen ion conducting type solid electrolyte fuel cells of the prior art, the operating temperature for power generation was about 1000°C; on the other hand, when the anode layer is formed from the rhenium metal, it can be understood from the above property of the rhenium metal that the fuel cell should be operated for power generation at temperatures of about 300°C or lower, considering variations in heat balance, and preferably at temperatures of about 200°C or lower. This means that the operating temperature for power generation can be reduced in the case of the solid electrolyte fuel cell whose anode layer is formed from a rhenium metal powder. For the transition metals other than rhenium, it was confirmed that an electromotive force appears between the cathode layer and the anode layer at 300°C or lower or even at room temperature.

Considering the above findings, and based on the previously described surface-migration type fuel cell structure comprising fuel cells formed on an insulating substrate surface and capable of achieving a thin fuel cell construction, the embodiments of the present invention are each directed to the provision of a fuel-cell device utilizing surface-migration on organic solid which uses a solid organic substrate as the substrate, and in which the cathode layer, which directly contacts air, and the anode layer, to which a fluid fuel is directly supplied from the fuel supply layer, are arranged in parallel and in close proximity to each other on one surface of the solid organic substrate and an electromotive force is generated between the cathode layer and the anode layer.

This configuration obviates the need to place the fuel cells in an explosive atmosphere of the mixed gas and also the need to house them in a hermetically sealed chamber. Further, as the cathode layer can be maintained in an oxygen-rich condition, and the anode layer in a fuel-rich condition, the catalytic activity of each layer can be enhanced. Moreover, when a transition metal such as rhenium is used for the anode layer, the operating temperature for power generation can be reduced compared with the prior art fuel cells, and it becomes possible to generate electricity even at room temperature.

When the fuel-cell device is constructed employing the above structure that supplies the fluid fuel to the entire surface of the anode layer formed from a transition metal, the power generation operating temperature of the fuel-cell device can be reduced; as a result, there is no need to take into account possible cracking of the solid layer due to thermal history, nor is it necessary to provide a hermetically sealed construction, and an inexpensive and handy fuel-cell device can thus be achieved. When the power generation operating temperature is lowered, it becomes easier to use a fluid fuel such as hydrogen, vapor-phase hydrocarbons, liquid-phase hydrocarbons, alcohol, ketone, ester, ether, etc. as the fuel for the fuel-cell device; furthermore, the substrate need not necessarily be formed from a heat resistant material, allowing the use of widely available inexpensive materials. Further, by using an organic material for the substrate, a flexible fuel-cell device can be achieved.

Next, a first embodiment of a fuel-cell device utilizing surface-migration on organic solid according to the present invention, which is constructed based on the above-stated reason, will be shown in Figure 1A. In Figure 1A, the structure of the fuel-cell device utilizing surface-migration on organic solid is schematically shown in cross section. Figure 2 shows a top plan view of the fuel-cell device utilizing surface-migration on organic solid; a portion of the cross section taken along line A-A in the figure corresponds to the cross section shown in Figure 1A.

In the fuel-cell device utilizing surface-migration on organic solid, strip-shaped anode layers (fuel electrodes) 3₁ and 3₂ are formed in parallel and in close proximity to the respective sides of a strip-shaped cathode layer (air electrode) 2 on one surface (in Figure 1A, on the upper surface) of a solid organic substrate 1 having a prescribed thickness. For example, when arranging a plurality of cathode layers and a plurality of anode layers on the same plane, from the standpoint of effective area utilization it is advantageous to employ an interlocking comb-shaped arrangement in which, as shown in Figure 2, the cathode layers and the anode layers are arranged in alternating fashion, with alternate layers connected together at one end.

Fuel supply layers 11₁ and 11₂, each formed from an inorganic powder filled material or an inorganic fiber aggregate, are placed on the upper surfaces of the respective anode layers 3₁ and 3₂. The fuel supply layers 11₁ and 11₂ are provided to supply a fluid fuel directly to the entire surfaces of the respective anode layers; the fluid fuel is fed through one end of each fuel supply layer, permeates through the fuel supply layer while being diffused therein, and is supplied to the anode layer.

When the cathode layers and the anode layers are arranged in parallel and in close proximity to each other on the surface of the solid organic substrate 1, ion conducting surface regions are formed between the cathode layer and its adjacent anode layers, thus forming fuel cells C1 and C2. Since these fuel cells are placed in an open air space, the cathode layer 2 is in an oxygen-rich condition, so that oxygen ions are formed there and supplied to the surface regions on the substrate 1. On the other hand, the fuel is supplied from the fuel supply layers 11₁ and 11₂ to the respective anode layers 3₁ and 3₂, where the fuel is activated to form fuel species which react with the oxygen ions that migrated over the surface regions. With this reaction, an electromotive force is generated between the cathode layer and the respective anode layers.

In Figure 2 which shows the top plan view of the fuel-cell device utilizing surface-migration on organic solid, the anode layers are hidden from view by the fuel supply layers formed thereon, but it will be noted that surface regions are formed between each cathode layer and the anode layers on both sides thereof, forming a plurality of fuel cells. Here, as the cathode layers and the anode layers are arranged in interlocking comb-shaped patterns with alternate layers connected together at one end, the plurality of fuel cells are connected in parallel to form one fuel-cell device.

Figure 1B shows another specific example of the fuel-cell device utilizing surface-migration on organic solid shown in Figure 1A. The basic structure of the fuel-cell device utilizing surface-migration on organic solid shown in Figure 1B is the same as that shown in Figure 1A, except that a cover layer is formed on the upper surface of each fuel supply layer. The cover layers 12₁ and 12₂ are formed on the surfaces of the respective fuel supply layers 11₁ and 11₂ opposite from the surfaces thereof contacting the anode layers 3₁ and 3₂. This reduces the possibility of the fluid fuel evaporating during permeation through the fuel layers, and thus secures a fuel supply passage through which the fuel is effectively transported to the entire surfaces of the anode layers.

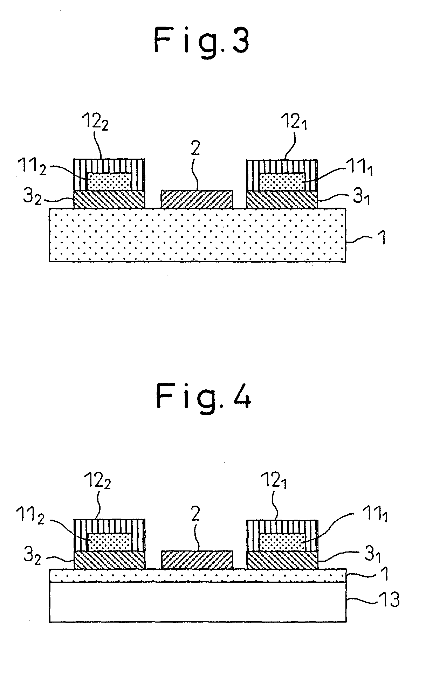

Figure 3 shows a second embodiment which is a modified example of the fuel-cell device utilizing surface-migration on organic solid shown in Figure 1B. The basic structure of this modified example is the same as that of the fuel-cell device utilizing surface-migration on organic solid shown in Figure 1B, the only difference being that all the surfaces of the fuel supply layers 11₁ and 11₂, except the surfaces contacting the anode layers 3₁ and 3₂, are covered with the respective cover layers 12₁ and 12₂.

This structure prevents the fluid fuel from leaking or evaporating from the fuel supply layers, and enhances the fuel-rich condition of each anode layer while ensuring the oxygen-rich condition of the cathode layer, as the air can be clearly separated from the fluid fuel. It also becomes possible to forcefully blow air to the cathode layer so that the cathode layer can be effectively exposed to the air. When air is blown in this way, reaction products can also be removed forcefully, and the power generation efficiency improves.

Figure 4 shows a third embodiment which concerns a specific example in which the fuel-cell device utilizing surface-migration on organic solid shown in any one of Figures 1 to 3 is mounted on a second substrate 13. Any fuel-cell device utilizing surface-migration on organic solid shown in Figures 1 to 3 can be mounted on the second substrate 13, though Figure 4 specifically shows the case of the fuel-cell device utilizing surface-migration on organic solid of Figure 3. The second substrate 13 may be a reinforcing substrate for reinforcing the structure of the fuel-cell device itself, or may be a heat-exchange substrate for dissipating the heat generated during power generation. Further, in applications where the output of the fuel-cell device utilizing surface-migration on organic solid is used as a power supply for an electronic circuit, for example, a printed wiring board may be used as the second substrate, or alternatively, the fuel-cell device may be formed directly on a semiconductor substrate, for example, on an insulating film of a semiconductor chip.

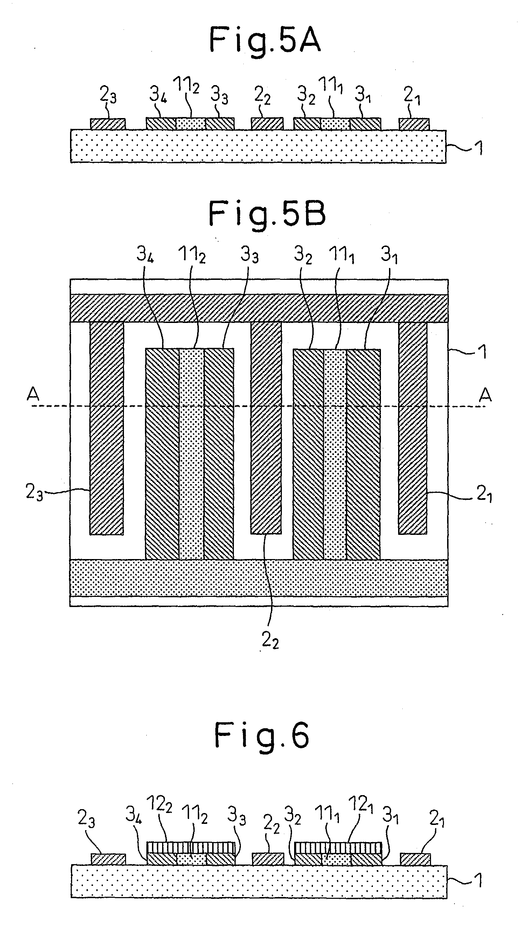

In each of the fuel-cell devices utilizing surface-migration on organic solid described above, the fuel supply layers are formed at least on the upper surfaces of the respective anode layers; on the other hand, a fourth embodiment shown in Figures 5A and 5B concerns a specific example in which the fuel supply layers are arranged differently than those described above. Figure 5A shows a cross-sectional view taken along line A-A in Figure 5B.

As shown in Figure 5B, strip-shaped cathode layers and strip-shaped anode layers are arranged parallel to each other on one surface of the solid organic substrate 1, and the surface regions are formed on the substrate between the respective layers, thus forming fuel cells; in this respect, there is no difference from the fuel-cell devices utilizing surface-migration on organic solid described above, but the difference is that, rather than arranging the cathode layers and the anode layers one alternating with the other, pairs of anode layers, 3₁ and 3₂, and 3₃ and 3₄, are arranged so as to be sandwiched alternately between the respective cathode layers 2₁, 2₂, and 2₃. Then, the fuel supply layers 11₁ and 11₂ are each interposed between the corresponding pair of anode layers in contacting relationship with the side surfaces of the anode layers.

This structure serves to reduce the number of fuel supply layers, while ensuring effective supply of the fluid fuel. Further, as the fuel supply layers are arranged on the same plane as the anode layers in contacting relationship with their sides, the thickness of the fuel-cell device can be further reduced, making it easier to stack a plurality of fuel-cell devices.

Figure 6 shows a modified example of the fourth embodiment shown in Figures 5A and 5B. In this modified example, similarly to the example shown in Figure 1B, a cover layer is provided on each of the fuel supply layers of the fuel-cell device utilizing surface-migration on organic solid. In the modified example, as both sides of each fuel supply layer are in contact with the respective sides of the adjacent anode layers, the air supply and the fuel supply can be separated from each other as long as the cover layer is formed to cover at least the fuel supply layer; in Figure 6, however, to ensure an even more reliable separation, the cover layers 12₁ and 12₂ are formed to also cover the anode layers 3₁ and 3₂, and 3₃ and 3₄, respectively.

As in the third embodiment shown in Figure 4, the fuel-cell device utilizing surface-migration on organic solid of the fourth embodiment shown in Figures 5 and 6 can also be formed on a second substrate.

The solid organic substrate used in the fuel-cell devices utilizing surface-migration on organic solid of the embodiments described above can be formed, for example, from a polyethylene terephthalate resin, a polyester resin, an epoxy resin, a polyimide resin, polyvinylidene chloride, polyethylene, or the like.
Using such resins, the solid organic substrate may be formed in the form of a block or in the form of a sheet. Further, the substrate may be formed in a laminated structure.

The anode layers formed on one surface of the solid organic substrate are constructed using rhenium (Re), tungsten (W), nickel (Ni), molybdenum (Mo), copper (Cu), or the like. These metals are used in the powdered or powder particle state to directly form the layers, or sintered into a porous structure. Alternatively, metal plates made of an iron-nickel-chromium alloy may be used directly as the anode layers.

The cathode layers arranged in parallel to the anode layers on the same surface of the solid organic substrate can be constructed using, for example, samarium strontium cobaltite or other known material such as lanthanum manganite doped with an element, for example, strontium (Sr), from group III of the periodic table (for example, lanthanum strontium manganite) or a lanthanum gallium oxide or cobalt oxide compound doped with such an element (for example, lanthanum strontium cobaltite).

while the cathode layers and anode layers of the fuel-cells utilizing surface-migration on organic solid of the above embodiments are both formed from porous materials, it is preferable to form the surface of the solid organic substrate as smooth as possible, because the surface regions over which the oxygen ions migrate need to be formed on the surface. Accordingly, it will be advantageous to form the solid organic substrate as a very compact structure.

In the fuel-cell devices utilizing surface-migration on organic solid of the above embodiments, as the substrate is formed from an organic material, the operating temperature for power generation can be lowered; as a result, unlike the solid electrolyte fuel-cell devices of the prior art, there is no concern of possible cracking of the substrate due to thermal history.

The fuel-cells utilizing surface-migration on organic solid according to the above embodiments are fabricated, for example, in the following manner. Strip-shaped or bar-shaped cathode layers preformed by calcining or other means and strip-shaped or bar-shaped anode layers likewise preformed are placed in parallel to each other, one spaced apart from another by a prescribed distance, on one surface of a flat plate-like organic substrate, and fuel supply layers are placed in contacting relationship with the anode layers. A fuel cell is formed between each cathode layer and its adjacent anode layer, and an electromotive force is induced between the lead wires respectively connected to the cathode layer and the anode layer.

When using a metal powder to form the anode layers, strips of metal powder are formed on the solid organic substrate on which the cathode layers are already placed; more specifically, each strip of metal powder is formed on the substrate surface between the respective cathode layers with a prescribed spacing provided relative to each cathode layer. In this case, the metal powder may be prepared, for example, in the form of a paste, and the paste may be applied in a strip-like pattern and then dried to form the strip-shaped anode layers. Alternatively, metal layers preformed in a porous structure, or metal plates themselves, may be placed as the anode layers.

When the strip-shaped cathode layers and anode layers have been formed on the same surface of the solid organic substrate as described above, the fuel supply layers, for example, unwoven fabrics, having the same width as the anode layers, in the case of the fuel-cell device utilizing surface-migration on organic solid shown in Figures 1A and 1B, are pressed thereon, to complete the fabrication of the solid organic surface-utilizing fuel cells.

A metal mesh that functions as an extraction electrode as well as a reinforcing member may be embedded in or fixed to the upper surface of each cathode layer. When the substrate is formed from an organic material and is therefore flexible, it is important to take into account the possible cracking of the hard cathode layers formed by sintering or the like. In the case of the embedding method, after embedding the metal mesh in the paste or green sheet forming the cathode layer, the resulting structure is calcined. In the case of the fixing method, the metal mesh is not completely embedded in the cathode layer material but may be fixed on a surface of it, followed by sintering.

For the metal mesh used here, a material that has excellent heat resistance, and that well matches the thermal expansion coefficient of the cathode layer which the metal mesh is to be embedded in or fixed to, is suitable. Specific examples include platinum metal and a platinum-containing metal alloy formed in the shape of a mesh. Alternatively, stainless steel of SUS 300 series (304, 316, etc.) or SUS 400 series (430, etc.) may be used; these materials are advantageous in terms of cost.

Instead of using the metal mesh, metal wires may be embedded in or fixed to the cathode layer. The metal wires are formed using the same metal material as that used for the metal mesh, and the number of wires and the configuration of the wire arrangement are not limited to any particular number or configuration.

The metal mesh or metal wires embedded in or fixed to the cathode layer serve to reinforce the structure so that the cathode layer, if cracked, will not disintegrate into pieces; furthermore, the metal mesh or the metal wires act to electrically connect the cracked portions, and function as a current collecting electrode, so that the power generation performance of the fuel cell does not degrade and the fuel cell can continue to generate electricity.

On the other hand, when the anode layers are formed from metal powder particles, the anode layers need not necessarily be provided with a metal mesh or metal wires, since the anode layers themselves flexibly deform because of the powder particles, accommodating the flexible structure of the solid organic substrate. Accordingly, when each anode layer is formed from powder particles, the effective area of the anode layer is maintained, and thus, the durability of the fuel-cell device utilizing surface-migration on organic solid can be enhanced.

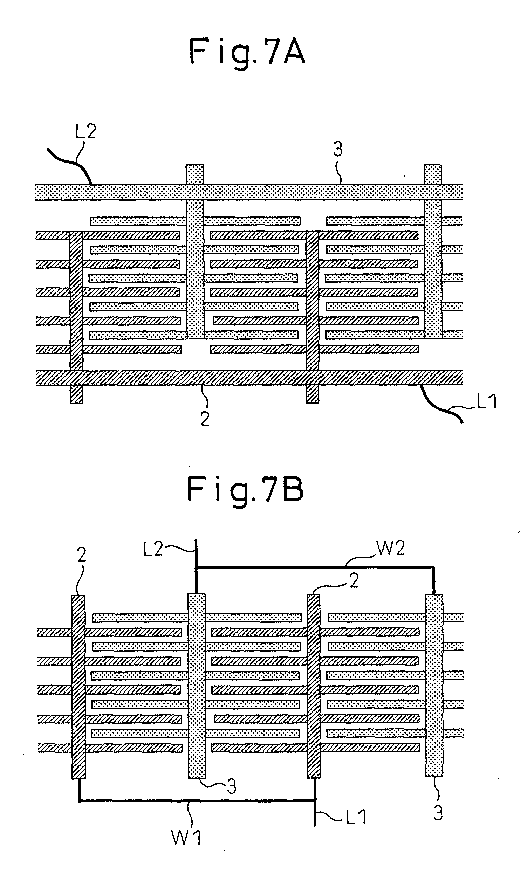

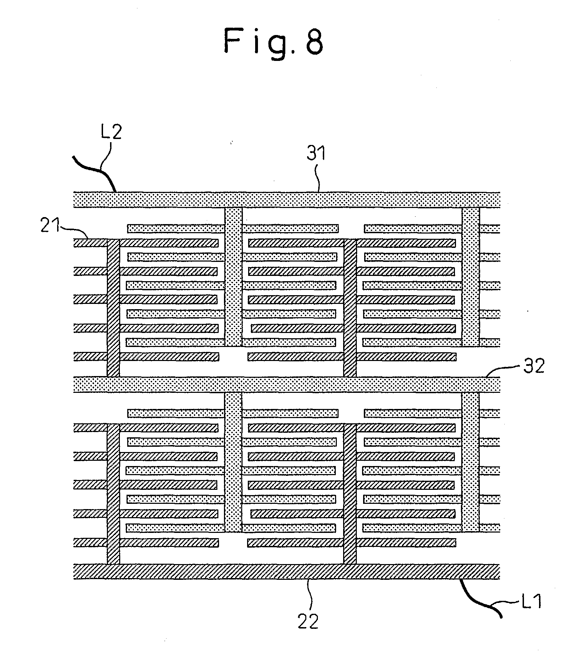

The structures of the fuel-cell devices utilizing surface-migration on organic solid according to the first to fourth embodiments have been described above, each embodiment dealing with the case where the cathode layers and the anode layers, which together constitute individual fuel cells, are formed in interlocking comb-shaped patterns on a single solid organic substrate, to construct one fuel-cell device. Next, referring to Figures 7A, 7B, and 8, a description will be given of how the power generation capacity and the electromotive force of the fuel-cell device can be respectively increased. Figures 7A, 7B, and 8 show examples corresponding to the first to third embodiments described above, and each example shows only the arrangement of the cathode layers and the anode layers, the latter mounted with the fuel supply layers. In the fourth embodiment also, the power generation capacity and the electromotive force can be respectively increased in the same manner as the other embodiments.

Figure 7A shows a configuration in which a plurality of fuel-cell devices utilizing surface-migration on organic solid, each identical to that shown in Figure 2, are fabricated on one solid organic substrate. A plurality of groups, each comprising a plurality of cathode layers, are each connected at one end to a common cathode 2, and a plurality of groups, each comprising a plurality of anode layers, are each connected at one end to a common anode 3; in this manner, all the fuel cells formed on the substrate are connected in parallel. A lead wire L1 is brought out of the common cathode 2, while a lead wire L2 is brought out of the common anode 3, and the power generation capacity to be output between the lead wires L1 and L2 is thus increased.

In Figure 7A, the common cathode 2 and the common anode 3 are used to connect the fuel cells in parallel between the plurality of groups; on the other hand, Figure 7B shows an example in which all the fuel cells are connected in parallel by using connecting wires W1 and W2 instead of using the common cathode 2 and the common anode 3.

Next, in the configuration of Figure 8, two fuel-cell device utilizing surface-migration on organic solid groups, each identical to that shown in Figure 7A, are fabricated on one solid organic substrate; here, the common cathode 2 of the first group is overlaid on the common anode 3 of the second group to form a common anode 32, and the lead wire L2 is brought out of the common anode 31 of the first group, while the lead wire L1 is brought out of the common cathode 22 of the second group.

With this method of connection, the electromotive force to be induced between the lead wires L1 and L2 can be increased, while retaining the power generation capacity of the fuel-cell device utilizing surface-migration on organic solid shown in Figure 7A.
If it is desired to further increase the electromotive force, this can be accomplished by sequentially connecting a plurality of fuel-cell device utilizing surface-migration on organic solid groups by overlaying the common cathode of one group on the common anode of the next group as shown in Figure 8.

Examples of the fuel-cell devices utilizing surface-migration on organic solid of the embodiments described above will be shown below.

### Example 1

A polyester film was used as the solid organic substrate. A strip of sintered SSC-SDC containing 50% by weight of Sm_{0.5}Sr_{0.5}CoO₃ was placed as a cathode layer on one surface of the film substrate. A strip of rhenium metal powder was applied on the same surface to form an anode layer by providing a spacing of about 0.1 mm or less relative to the cathode layer. Then, ethanol-impregnated gauze was placed in contact with the anode layer.

When test leads were connected to the cathode layer and the anode layer, at room temperature, an open circuit voltage of about 0.8 V and a short-circuit current of about 120 µA were obtained.

### Example 2

A polyester film was used as the solid organic substrate. A strip of sintered SSC-SDC as a cathode layer and a strip-shaped tungsten plate as an anode layer were placed, one spaced apart from the other by about 0.1 mm or less, on one surface of the film substrate. Then, gauze dampened with ethanol was placed near the anode layer.

When test leads were connected to the cathode layer and the anode layer, at room temperature, an open circuit voltage of about 0.3 V was obtained, and the short-circuit current at this time was about 6 µA.

### Example 3

A strip of sintered SSC-SDC as a cathode layer was placed on a polyimide resin layer formed on a silicon wafer, and a strip of rhenium metal powder was placed to form an anode layer by providing a spacing of about 0.1 mm or less relative to the cathode layer. Then, gauze dampened with ethanol was placed near the anode layer to impregnate the anode layer with the ethanol.

When test leads were connected to the cathode layer and the anode layer, at room temperature, an open circuit voltage of about 0.3 V was obtained, and the short-circuit current at this time was about 90 µA.

As described above, according to the present invention, the cathode layers and the anode layers are arranged in parallel and in close proximity to each other on a solid organic substrate, and the cathode layers are exposed to the air in the atmosphere, while the anode layers are arranged each contacting a fuel supply layer so that a fluid fuel is supplied directly to the anode layers; as a result, an oxygen-rich condition can be easily maintained at the cathode layers, and a fuel-rich condition at the anode layers, by employing a simple structure that does not require a special hermetically sealed construction, thus achieving reductions in the size and cost of the fuel-cell device utilizing surface-migration on organic solid.

Further, by selecting and using a material having high catalytic activity for the anode layers to which the fluid fuel is directly supplied, a fuel-cell device utilizing surface-migration on organic solid can be achieved that can reduce the operating temperature for power generation. Further, as the reduced operating temperature makes it easier to use an organic material for the substrate, a fuel-cell device can be achieved that is highly flexible, inexpensive, and simple in structure, and the usability of the fuel-cell device can thus be enhanced.

## Claims

1. A fuel-cell device utilizing surface-migration on organic solid in which a cathode layer, to which air is supplied, and an anode layer, to which a fluid fuel is supplied, are arranged on one surface of a solid organic substrate in such a manner as to oppose each other across a given surface region of said solid organic substrate, wherein
a fuel supply layer for supplying said fluid fuel to said surface region via said anode layer is provided in a contacting relationship with said anode layer.

2. A fuel-cell device utilizing surface-migration on organic solid as claimed in claim 1, wherein said solid organic substrate is formed from a material selected from the group consisting of a polyethylene terephthalate resin, a polyester resin, an epoxy resin, a polyimide resin, a polyvinylidene chloride resin, and a polyethylene resin.

3. A fuel-cell device utilizing surface-migration on organic solid as claimed in claim 1 or 2, wherein said solid organic substrate is formed on a reinforcing substrate; or
on a semiconductor substrate; or
on a heat-exchange substrate.

4. A fuel-cell device utilizing surface-migration on organic solid as claimed in any preceding claim, wherein said cathode layer and said anode layer are porous layers each formed in the shape of a strip; or
wherein said cathode layer is a porous layer formed in the shape of a strip, and said anode layer is a metal powder filled layer formed in the shape of a strip; or
wherein said cathode layer is a porous layer formed in the shape of a strip, and said anode layer is a metal plate formed in the shape of a strip.

5. A fuel-cell device utilizing surface-migration on organic solid as claimed in any preceding claim, wherein said anode layer is formed from a material selected from the group consisting of rhenium, tungsten, nickel, molybdenum, and copper and/or
wherein said cathode layer is formed from a material selected from the group consisting of samarium strontium cobaltite, lanthanum strontium cobaltite, and lanthanum strontium manganite.

6. A fuel-cell device utilizing surface-migration on organic solid as claimed in any preceding claim, wherein said fuel supply layer is placed along the length of said anode layer in contacting relationship with an upper surface or a side surface of said anode layer, and
said fluid fuel permeates from one end of said fuel supply layer and is supplied to said surface region.

7. A fuel-cell device utilizing surface-migration on organic solid as claimed in claim 6, wherein said fuel supply layer is formed from an inorganic powder filled material or an inorganic fiber aggregate.

8. A fuel-cell device utilizing surface-migration on organic solid as claimed in claim 6 or 7, wherein said fuel supply layer has, on a surface thereof opposite to said anode layer, a cover layer for preventing said fluid fuel from scattering or evaporating.

9. A fuel-cell device utilizing surface-migration on organic solid as claimed in claim 8, wherein said cover layer covers all surfaces of said fuel supply layer except the surface thereof contacting said anode layer.

10. A fuel-cell device utilizing surface-migration on organic solid as claimed in any preceding claim, wherein a plurality of cathode layers and a plurality of anode layers are formed on said solid organic substrate.

11. A fuel-cell device utilizing surface-migration on organic solid as claimed in claim 10, wherein said plurality of cathode layers extending from a common cathode layer and said plurality of anode layers extending from a common anode layer are arranged parallel to each other in interlocking comb-shaped patterns on said solid organic substrate.

12. A fuel-cell device utilizing surface-migration on organic solid as claimed in claim 11, wherein a plurality of said common cathode layers and a plurality of said common anode layers are provided, and wherein
said common cathode layers and said common anode layers are respectively connected together electrically, and said common cathode layers and said common anode layers are connected in parallel,
or wherein
said common cathode layers and said common anode layers are alternately connected electrically, and said common cathode layers and said common anode layers are connected in series,
or wherein
said common cathode layers and said common anode layers are respectively connected together electrically, forming a plurality of parallel connection groups of said common cathode layers and said common anode layers, and
said plurality of parallel connection groups are connected in series.

13. A fuel-cell device utilizing surface-migration on organic solid as claimed in claim 10, wherein said fuel supply layer is placed between two adjacent ones of said anode layers in contacting relationship with side surfaces of said adjacent anode layers, and
said fluid fuel permeates from one end of said fuel supply layer and is supplied to said surface region via each of said adjacent anode layers.

14. A fuel-cell device utilizing surface-migration on organic solid as claimed in claim 13, wherein each of said cathode layers is disposed on either side of said anode layers opposite from said fuel supply layer in such a manner as to sandwich said surface region therebetween.

15. A fuel-cell device utilizing surface-migration on organic solid as claimed in claim 13 or 14, wherein a cover layer is provided that covers upper surfaces of said adjacent anode layers as well as said fuel supply layer placed between said anode layers.
